# EUROPÄISCHE PATENTSCHRIFT

(11) **EP 1 002 188 B1**
(45) Veröffentlichungstag und Bekanntmachung des Hinweises auf die Patenterteilung: **26.06.2002**
(21) Anmeldenummer: 98945177.8
(22) Anmeldetag: 07.08.1998
(51) Int. Cl.: F01N 3/28, F01N 7/10

(54) **ABGASSYSTEM**
GAS EXHAUST SYSTEM
SYSTEME D'ECHAPPEMENT DE GAZ

(30) Priorität: 22.08.1997 DE 19736638; 30.08.1997 DE 19738021; 15.11.1997 DE 19750733; 01.04.1998 DE 19814584
(43) Veröffentlichungstag der Anmeldung: 24.05.2000
(73) Patentinhaber: Ford Global Technologies, Inc., Dearborn, Michigan 48126 (US); Deutsches Zentrum für Luft- und Raumfahrt e.V., 53175 Bonn (DE)
(72) Erfinder: BECKER, Manfred, D-53797 Lohmar (DE); HOFFSCHMIDT, Bernhard, D-51469 Bergisch Gladbach (DE); MEURER, Josef, D-53844 Troisdorf (DE)
(74) Vertreter: Hilleringmann, Jochen, Dipl.-Ing.
(86) Internationale Anmeldenummer: EP9805023
(87) Internationale Veröffentlichungsnummer: WO9910635

(56) Entgegenhaltungen:
- EP-A- 0 741 236
- US-A- 4 420 933
- US-A- 5 220 789
- US-A- 5 408 828

## Beschreibung

Die Erfindung betrifft ein Abgassystem für eine Verbrennungskraftmaschine, insbesondere für Fahrzeuge.

Abgassysteme für Verbrennungskraftmaschinen weisen einen Sammler auf, in dem die von den einzelnen Verbrennungskammern kommenden Krümmerrohre zu einem Abgasrohr zusammengeführt sind. Das Abgasrohr ist im allgemeinen unter der Bodenbaugruppe des Fahrzeugs nach hinten geführt. Zur Abgasreinigung ist in dem Abgasrohr ein Katalysator mit einem oder mehreren Katalysatorelementen angeordnet.

Die katalytische Wirkung einer auf dem Katalysatorelement vorgesehenen Beschichtung tritt erst ab einer relativ hohen Betriebstemperatur ein. Wenn der Abstand zwischen dem Sammler und dem Katalysator relativ groß ist, wird die Betriebstemperatur des Katalysators erst einige Zeit nach dem Start der Verbrennungskraftmaschine erreicht (z. B. nach einigen Minuten). Da viele Fahrzeuge in erster Linie für Kurzstreckenfahrten verwendet werden, hat der Katalysator bei einem beträchtlichen Teil seiner Betriebszeit die erforderliche Betriebstemperatur nicht erreicht.

Um die Aufwärmzeit des Katalysators, d. h. die Zeit bis zum Erreichen der erforderlichen Betriebstemperatur zu verkürzen, werden Zusatzheizungen wie beispielsweise eine induktive Beheizung des Katalysators oder eine Erwärmung des Abgasstroms durch Gas- oder Benzinbrenner oder durch Wärmespeicher kurz vor dem Katalysator eingesetzt. Durch das Einsetzen von Zusatzheizungen werden das Gewicht, der Raumbedarf und die Kosten erhöht.

Um die Aufwärmzeit des Katalysators zu verringern, kann der Katalysator möglichst nahe am Sammler angeordnet werden. Durch eine derartige Anordnung des Katalysators kann die erforderliche Betriebstemperatur zwar sehr kurz nach dem Start der Verbrennungskraftmaschine erreicht werden, aber die Strömungsverteilung über den Querschnitt des Abgasrohrs ist in Strömungsrichtung kurz hinter dem Sammler stark inhomogen. Die Inhomogenität in der Abgasströmung wird durch die zwischen der Innenwand des Abgasrohrs und den Abgasen auftretende Reibung hervorgerufen. Aufgrund der Inhomogenität der Strömung treten in dem Katalysator unterschiedliche Belastungen und daraus resultierend lokale Überbeanspruchungen auf, durch die das Katalysatorelement beschädigt oder zerstört werden kann.

Die US-A-4,420,933 offenbart ein Abgassystem mit einem Sammler, einem in Durchströmrichtung hinter dem Sammler angeordneten Katalysatorelement und einer zwischen dem Sammler und dem Katalysatorelement angeordneten Beruhigungskammer. Diese Beruhigungskammer besitzt eine Eintrittsöffnung, die derart ausgebildet ist, daß sich eine Abgasströmung als Freistrahl in der Beruhigungskammer ausbreitet, wobei die Beruhigungskammer wenigstens so groß wie der Sammler ausgebildet ist.

Die US-A-5,408,828 offenbart ein Abgassystem, bei dem zwischen Sammler und Katalysator ein Diffusor angeordnet ist, dessen Öffnungswinkel sprunghaft größer wird, wodurch sich die Abgasströmung ais Freistrahl ausbildet. Der Diffusor ist allerdings kurz ausgebildet.

Aufgabe der Erfindung ist es, ein Abgassystem zu schaffen, bei dem das Katalysatorelement nahe dem Sammler angeordnet werden kann und ein Beschädigen des Katalysatorelements vermieden ist.

Die Lösung der Aufgabe erfolgt erfindungsgemäß durch die Merkmale des Anspruchs 1, Ausgestaltungen der Erfindung sind in den Unteransprüchen angegeben.

Bei dem erfindungsgemäßen Abgassystem für Verbrennungskraftmaschinen ist zwischen dem Sammler und dem Katalysatorelement eine Beruhigungskammer angeordnet, die eine Einlaßöffnung umfaßt. Die Beruhigungskammer ist derart ausgebildet, daß ihre Länge in Durchströmrichtung mindestens um ein Fünffaches größer als der Durchmesser ihrer Einlaßöffnung ist, so daß die Abgasströmung als Freistrahl in die Beruhigungskammer eintritt und sich in ihr als Freistrahl ausbreitet. Als Freistrahl wird eine Strömung bezeichnet, deren Querschnitt nicht durch ein Rohr begrenzt ist, so daß sich die Verbrennungsgase in der Beruhigungskammer axial und radial zur Strömungsrichtung ungehindert ausbreiten können. Nach dem Eintritt in die Beruhigungskammer findet keine Reibung zwischen der Abgasströmung und der Begrenzungswand der Beruhigungskammer statt, sondern es entsteht eine dämpfende Rezirkulationszone. Durch das Vorsehen einer Beruhigungskammer, die von der Abgasströmung nach Art eines Freistrahls durchströmt wird, ist die Abgasströmung über ihren Querschnitt an der Katalysator-Einlaßöffnung homogenisiert und bei reduzierten Geschwindigkeiten auf die Katalysator-Geometrie angepaßt. Ferner findet in der Beruhigungskammer eine Homogenisierung der Abgasströmung über die Zeit statt, da die aufgrund der zeitlich versetzten Auslaßtakte hervorgerufene Pulsierung des Abgasstroms gedämpft wird.

Durch das Vorsehen einer Beruhigungskammer zwischen dem Sammler und dem Katalysatorelement kann das Katalysatorelement unmittelbar hinter dem Sammler, d. h. nahe an der Verbrennungskraftmaschine angeordnet werden, ohne daß die Gefahr unterschiedlicher Belastungen des Katalysatorelements besteht. Dadurch ist die Aufwärmzeit des Katalysatorelements bis zum Erreichen der erforderlichen Betriebstemperatur verringert.

Vorzugsweise ist die Beruhigungskammer so ausgebildet, daß sich an einer Eintrittsöffnung der Beruhigungskammer, durch die das Abgas in die Beruhigungskammer strömt, die für die Abgasströmung zur Verfügung stehende Querschnittsfläche stufenartig vergrößert. Durch eine solche stufen- oder sprungartige Vergrößerung der Querschnittsfläche ist sichergestellt, daß die Abgasströmung als Freistrahl in die Beruhigungskammer eintritt. Eine stufenartige Vergrößerung der Querschnittsfläche ist auch dann gegeben, wenn nur an einem Teil des Umfangs der Eintrittsöffnung in Durchströmungsrichtung ein Sprung vorgesehen ist. Dies ist beispielsweise der Fall, wenn in einer Beruhigungskammer mit ovalem Querschnitt eine kreisrunde Eintrittsöffnung vorgesehen ist.

Der Innendurchmesser der Beruhigungskammer weist vorzugsweise ein Verhältnis zum Innendurchmesser der Einlaßöffnung der Beruhigungskammer von mehr als 2,5 : 1 auf. Die obere Grenze für die Länge der Beruhigungskammer bestimmt sich daraus, daß sich der Freistrahl mit zunehmender Entfernung vom Einlaß der Beruhigungskammer an deren Innenwand anlegt.

Vorzugsweise bilden die Beruhigungskammern und das Katalysatorelement eine Einheit, so daß es sich um ein Bauteil, d. h. einen Katalysator mit Beruhigungskammer handelt.

Bei der Anordnung des Katalysatorelements in der Nähe des Sammlers, d. h. in kurzem Abstand zur Verbrennungskraftmaschine, kann es vorkommen, daß in das Katalysatorelement unverbrannte Verbrennungsgasgemische gelangen und sich dort niederschlagen. Im Katalysatorelement befindliche Verbrennungsgasgemische können sich entzünden. Die dabei entstehenden hohen Verbrennungstemperaturen sowie die schlagartige Druckerhöhung können zu einer Beschädigung des Katalysatorelements führen. Um eine derartige Beschädigung zu vermeiden, kann zwischen dem Sammler und dem Katalysatorelement ein Filter angeordnet sein. Der Filter kann in Strömungsrichtung der Abgase vor oder bevorzugt hinter der Beruhigungskammer angeordnet sein. Ebenso ist es möglich, den Filter innerhalb der Beruhigungskammer anzuordnen oder in jedem Krümmerrohr einen gesonderten Filter vorzusehen.

Bei dem Filter handelt es sich vorzugsweise um einen porösen keramischen Körper, insbesondere einen Schaumkörper. Aufgrund des Filtermaterials können Ablagerungen in dem Filter verbrennen, ohne eine Beschädigung des Filters hervorzurufen. Es handelt sich bei dem als keramischer Schaumkörper ausgebildeten Filter somit um einen selbstreinigenden Filter.

Ein derartiger Filter wirkt zusätzlich als Mischer, wodurch die unterschiedlichen Bestandteile der Abgase homogen durchmischt werden. Dadurch ist der Wirkungsgrad des Katalysatorelements erhöht.

Nachfolgend sind mehrere vorteilhafte Verfahren zum Herstellen von geeigneten Filtern bzw. Mischern beschrieben:

Zur Herstellung von porösen, temperaturbeständigen Mischern mit Filtereigenschaften können flexible Kunststoffschaumkörper verwendet werden, die mit Benetzungsmaterial benetzt werden. Durch die Benetzung wird die gesamte Oberfläche der Struktur des Kunststoffschaumkörpers mit dem Benetzungsmaterial, beispielsweise keramischem Schlicker versehen. Anschließend wird das Benetzungsmaterial ausgehärtet. Zum Aushärten wird der benetzte Kunststoffschaumkörper so stark erhitzt, daß das Kunststoffschaummaterial durch Verbrennen entfernt wird.

Zur Herstellung eines in dem Abgassystem verwendbaren Mischers ist folgendes Verfahren als besonders vorteilhaftes Herstellungsverfahren vorgeschlagen, bei dem
- mindestens ein Kunststoffschaumkörper mit einer Oberseite und einer Unterseite aus einem flexiblen Kunststoffschaummaterial erzeugt wird,
- der Schaumkörper um einen Scherwinkel in eine erste Richtung geschert wird, indem er einer ersten Scherkraft ausgesetzt wird,
- in den so gescherten Kunststoffschaumkörper von der Oberseite und/oder der Unterseite erste Kanäle eingebracht werden, und zwar in einem vom ersten Scherwinkel verschiedenen Winkel zur Normalen der Oberseite und/oder der Unterseite und
- die erste Scherkraft wieder aufgehoben wird, wobei sich der Kunststoffschaumkörper wieder zurückstellt.

Das Verfahren beruht auf dem Kerngedanken, in eine flexible Schaumstruktur zunächst diese durchziehende Kanäle einzubringen. Diese Kanäle verlaufen zwecks verbesserter Durchmischung des den Körper durchströmenden Fluids schräg zur axialen Erstreckung des Körpers. Man könnte diese schrägverlaufenden Kanäle unter einem Winkel von ungleich 90° zur Ober- bzw. Unterseite der Schaumstruktur bzw. des Schaumkörpers einbringen. Dies erschwert jedoch den Fertigungsprozeß, was insbesondere in der flexiblen Struktur des Schaumkörpers begründet ist. Bei einer ersten Variante wird daher vorgeschlagen, den Schaumkörper zu scheren, d. h. auf den Schaumkörper Scherkräfte einwirken zu lassen. Jetzt können die Kanäle unter einem Winkel von insbesondere 90° zur Ober- bzw. Unterseite des gescherten Schaumkörpers eingebracht werden. Wird danach die auf den Schaumkörper wirkende Scherkraft aufgehoben, so daß sich der Schaumkörper in seinem entspannten Zustand befindet, so verlaufen die den Schaumkörper durchziehenden Kanäle schräg.

Auf die zuvor beschriebene Weise lassen sich in einer ersten Richtung verlaufende erste Kanäle in den Kunststoffschaumkörper einbringen. Wird der Kunststoffschaumkörper nach Einbringung der ersten Kanäle in einer anderen Richtung geschert, die vorzugsweise entgegengesetzt zur Wirkrichtung der zuvor aufgebrachten Scherkraft gerichtet ist, so lassen sich zweite Kanäle in den Schaumkörper einbringen, die in einer zu den ersten Kanälen verschiedenen Richtung durch den Schaumkörper verlaufen. Der Kunststoffschaumkörper ist damit von zwei Gruppen von Kanälen durchzogen, die unterschiedliche Ausrichtungen aufweisen.

In Abhängigkeit von der Größe der Scherkräfte und deren Wirkrichtungen lassen sich unterschiedlich stark geneigt verlaufende Kanäle in einen Kunststoffschaumkörper einbringen. Die Ausrichtung der Kanäle hängt nicht zuletzt auch davon ab, unter welchem Winkel sie in den gescherten Schaumkörper eingebracht werden.

Die Verfahrensschritte des Scherens des Kunststoffschaumkörpers und des Einbringens von Kanälen können auch gleichzeitig durchgeführt werden. Hierzu kann beispielsweise ein Stanzwerkzeug auf die Ober- oder Unterseite des unverformten Schaumkörpers, auf den noch keine Scherkräfte wirken, aufgesetzt werden. Sobald das Stanzwerkzeug eine Seite des Schaumkörpers berührt, wird es bezüglich der gegenüberliegenden Seite des Kunststoffschaumkörpers verschoben, so daß auf den Schaumkörper Scherkräfte wirken. Der Stanzvorgang wird entweder nach Erreichen des gewünschten Scherwinkels oder bereits während des Schervorgangs durchgeführt. Es ist somit ausreichend, das Stanzwerkzeug während des Stanzvorgangs bezüglich der gegenüberliegenden Seite des Schaumkörpers zu verschieben, so daß auf den Schaumkörper Scherkräfte wirken.

Damit die in den Schaumkörper gestanzten Kanäle einen möglichst kreisrunden Querschnitt haben, kann der Schaumkörper vor oder während dem Stanzen zusammengedrückt und dadurch komprimiert werden.

Bei einer Variante des Verfahrens werden die Kanäle in einen Schaumkörper eingebracht, ohne daß dieser geschert wird. Bei dieser Variante werden zunächst erste Kanäle in eine Außenfläche eines Schaumkörpers eingebracht. Anschließend wird der Schaumkörper geschnitten, wobei seine Schnittfläche unter einem spitzen Winkel zur Längserstreckung der ersten Kanäle verläuft. Ein derart beschnittener Schaumkörper kann weiterverarbeitet werden, bis sich ein Tafelmaterial einstellt, dessen Unter- bzw. Oberseiten parallel zueinander verlaufen, wobei eine Seite durch die Schnittfläche bestimmt ist.

Bei der zuvor beschriebenen Variante können nach dem Schneiden des Kunststoffschaumkörpers in die Schnittfläche zweite Kanäle eingebracht werden, woraufhin der Kunststoff schaumkörper anschließend nochmals geschnitten wird, und zwar derart, daß diese Schnittfläche unter einem spitzen Winkel zu sämtlichen Kanälen verläuft. Wird auch der so beschnittene Kunststoffschaumkörper weiterverarbeitet, so daß Tafelmaterial oder Schaumstoffblöcke entstehen, liegt eine Schaumstruktur vor, die von schräg zueinander verlaufenden Kanälen durchzogen ist und zueinander parallele Ober- bzw. Unterseiten aufweist, von denen mindestens eine durch die (zweite) Schnittfläche bestimmt ist.

In der allgemeinsten Form wird durch dieses vorteilhafte Herstellungsverfahren eine Schaumstruktur geschaffen, die von schräg verlaufenden Kanälen durchzogen ist, wobei diese Kanäle gruppenweise parallel zueinander verlaufen und in mehrere Gruppen von zueinander unterschiedlich verlaufenden Kanälen unterteilt werden kann. Derartige Schaumstoffkörper dienen beispielsweise als Halbzeuge zur Herstellung keramischer Schäume, auf diese Materialien und deren auf die Schaumkörper aufbauenden Verfahrensprozesse wird weiter unten noch eingegangen werden.

Zweckmäßigerweise werden mehrere derartig hergestellte Schaumkörper übereinanderliegend angeordnet, so daß auf diese Weise ein von einem Fluid durchströmbarer Körper mit Mischereigenschaften erzeugt werden kann, und zwar ohne durch den Herstellungsprozeß bedingte Längenbeschränkungen. Die einzelnen Schaumkörper werden vorzugsweise als geometrisch beliebiges Tafelmaterial mit zueinander parallelen Ober- und Unterseiten erzeugt.

Die Einbringung der Kanäle in den Schaumkörper erfolgt vorzugsweise durch Stanzen. Eine derartige Stanze weist zwei Andrückteile auf, die mit Reibung an der Ober- und Unterseite des Schaumkörpers anliegen. Nachdem diese beiden Andrückteile in Reibschluß mit dem Kunststoffschaumkörper gebracht worden sind, wird zumindest das eine Andrückteil relativ zum anderen bewegt, so daß der dazwischen angeordnete Kunststoffschaumkörper geschert wird. Nun kann das Stanzwerkzeug in den Kunststoffschaumkörper eingefahren werden. Dabei bietet es sich an, den gescherten Kunststoffschaumkörper durch Aufeinanderzubewegen der Andrückteile so weit zu komprimieren, daß sich die Löcher mittels Stanzwerkzeugen einbringen lassen.

Zweckmäßig ist es ferner, wenn die Andrückteile gelocht sind, so daß die Stanzwerkzeuge durch die Löcher hindurch in den Kunststoffschaumkörper hineingebracht werden können. In demjenigen Zustand, in dem der Kunststoffschaumkörper gestanzt wird, sollten die Löcher der beiden Andrückteile miteinander fluchten.

Mit dem Verfahren läßt sich also ein von einem Fluid durchströmbarer poröser Körper herstellen, der entweder einen Kunststoffschaumkörper oder mehrere übereinander angeordnete Kunststoffschaumkörper aufweist, der bzw. von denen jeder ein oder mehrere um einen gemeinsamen Winkel oder unterschiedliche Winkel schräg verlaufende Kanäle aufweist. Aufgrund der porösen Struktur des Kunststoffschaummaterials sind diese Kanäle untereinander verbunden. Bei Verwendung mehrerer Kunststoffschaumkörper ist es zweckmäßig, wenn die Ausrichtung der aneinander grenzenden Kanäle benachbarter Schaumkörper jeweils unterschiedlich, insbesondere gegensinnig ist.

Bei dem Kunststoffschaummaterial handelt es sich zweckmäßigerweise um ein offenzelliges oder geschlossenzelliges Material. Insbesondere wird als Kunststoffschaummaterial Polyurethan eingesetzt.

Auf der Basis der gemäß obigem Verfahren hergestellten Schaumkörper lassen sich starre Schäume, insbesondere keramische Schäume herstellen, indem der Kunststoffschaumkörper bzw. die mehreren aneinanderliegenden Kunststoffschaumkörper mit Benetzungsmaterial benetzt wird bzw. werden. Diese Benetzung muß man sich derart vorstellen, daß die gesamte Oberfläche der Struktur jedes Kunststoffschaumkörpers mit dem Benetzungsmaterial versehen ist. Vorzugsweise wird als Benetzungsmaterial Schlicker eingesetzt. Grundsätzlich ist es wichtig, daß das Benetzungsmaterial aushärtet, so daß nach dem Aushärten ein selbständig tragfähiger benetzter Kunststoffschaumkörper entsteht, dessen Eigenformstabilität und Eigentragfähigkeit durch das Benetzungsmaterial gegeben ist. In dem so erstellten porösen Körper befinden sich also zum einen die Kanäle, deren Innenwände von dem Benetzungsmaterial benetzt sind, und zum anderen die Verbindungen zwischen benachbarten Kanälen, die ebenfalls an ihren Innenwanden benetzt sind. Anschließend wird dieser von ausgehärtetem Benetzungsmaterial benetzte Schaumkörper so stark erhitzt, daß das Kunststoffschaummaterial durch Verbrennung entfernt wird. Eine alternative Methode der Entfernung des Kunststoffschaummaterials besteht in einer Verflüchtigung in Folge beispielsweise einer chemischen Reaktion mit einem entsprechenden Behandlungsgas.

Auf die oben beschriebene Weise lassen sich mit Kanälen versehene poröse Körper beliebiger Länge herstellen, und zwar auch dann, wenn die Kanäle Hinterschneidungen oder dergleichen dreidimensional sich verändernde Verläufe aufweisen. Der Vorteil eines derartigen Mischers (poröser Körper mit diesen durchziehenden Kanälen) besteht auch darin, daß sein Strömungswiderstand nur gering ist. Sicherlich würde man auch bei einem porösen Körper einen Fluiddurchsatz erzielen können, allerdings unter Entstehung eines wesentlich höheren Strömungswiderstandes, als dies bei dem nach vorstehendem Verfahren hergestellten porösen Körper der Fall ist.

In vorteilhafter Weise erfolgt das Benetzen durch Tränken des Kunststoffschaumkörpers bzw. der Kunststoffschaumkörperanordnung mit dem Benetzungsmaterial. Diese Verfahrensweisen sind grundsätzlich von der Herstellung keramischer Schäume her bekannt. Der keramische Schlicker wird durch Brennen ausgehärtet. Hierbei wird gleichzeitig auch das Kunststoffmaterial durch Verdampfen entfernt.

Werden mehrere Kunststoffschaumkörper aneinanderliegend mit Benetzungsmaterial versehen, so ist es zweckmäßig, die Kunststoffschaumkörper vor der Benetzung untereinander zu verbinden. Hier bietet es sich an, die Kunststoffschaumkörper durch Erhitzung ihrer Anlageflächen miteinander zu verschweißen. Eine Alternative zu dieser Verbindung besteht darin, die Kopplung benachbarter Kunststoffschaumkörper durch das ausgehärtete Benetzungsmaterial zu realisieren.

Da der Kunststoffschaummaterialkörper bzw. die Anordnung aufeinanderfolgender Kunststoffschaummaterialkörper bei noch nicht ausgehärtetem Benetzungsmaterial noch flexibel ist, läßt er bzw. sie sich in gekrümmte oder in sonstiger Weise geformte Formen einlegen (beispielsweise Krümmer-Formen oder dergleichen), um dann in diesen Formen beispielsweise durch Brennen auszuhärten. Damit wird dem fertigen Produkt eine Form verliehen, die den platzsparenden Einbau in einer Mischeranlage oder einer Rohrleitung einer solchen Mischeranlage ermöglicht.

Bei dem Verfahren ist als besonders vorteilhaft herauszustellen, daß zur Herstellung der Kunststoffschaummaterialkörper auf die üblichen Herstellungsprozesse für Schäume zurückgegriffen werden kann. Die zumeist in Form von Blöcken hergestellten Schäume müssen lediglich zu Tafelmaterial verarbeitet werden, was dann erfindungsgemäß geschert wird, um die Kanäle einzubringen. Die Herstellung von Blockschaum ist recht kostengünstig, so daß insgesamt nach dem erfindungsgemäßen Verfahren auch die starren von Fluid durchströmbaren Körper verhältnismäßig kostengünstig hergestellt werden können, wobei man insbesondere auf die wohlbeherrschte Technologie der Schaumherstellung zurückgreifen kann. Es sind insbesondere keine besonderen Formen für die Schaumherstellung erforderlich. Man greift also im Rahmen des erfindungsgemäßen Herstellungsverfahrens auf ein Halbzeug, nämlich Kunststoffschaum-Tafelmaterial zurück, was extrem kostengünstig angeboten wird. Auch die weiteren Verfahrensschritte, insbesondere die Einbringung der schrägverlaufenden Kanäle erfolgt erfindungsgemäß auf einfache und produktionstechnisch kostengünstige Art und Weise.

Zur Herstellung des in dem Abgassystem verwendbaren Mischers mit diesen durchziehenden Kanälen ist ferner ein weiteres vorteilhaftes Verfahren vorgeschlagen, bei dem
- in eine Form mindestens ein den Verlauf und die Formgebung mindestens eines Kanals definierendes Einsatzteil eingesetzt wird,
- in die Form ein Kunststoffschaummaterial eingebracht wird, so daß das mindestens eine Einsatzteil in dem nach Aushärtung flexiblen Kunststoffschaumkörper eingebettet ist,
- der Kunststoffschaumkörper aus der Form und das mindestens eine Einsatzteil aus dem Kunststoffschaumkörper entnommen werden,
- die Oberfläche des Kunststoffschaumkörpers mit einem aushärtbaren Benetzungsmaterial benetzt wird und
- das Kunststoffschaummaterial des mit Benetzungsmaterial benetzten Kunststoffschaumkörpers durch Erhitzen desselben entfernt wird, so daß ein von Fluid durchströmbarer, poröser, aus dem Benetzungsmaterial bestehender Körper entsteht.

Dieses Verfahren beruht auf dem Kerngedanken, in eine flexible Schaumstruktur zunächst diese durchziehende Kanäle einzubringen. Dies erfolgt erfindungsgemäß dadurch, daß ein den Verlauf des späteren Kanals darstellendes Einsatzteil von einem Kunststoffschaummaterial umschäumt und in dieses eingebettet wird. Alternativ können mehrere derartige Einsatzteile verwendet werden. Die Einsatzteile können eine sich in allen drei Dimensionen verändernde Struktur aufweisen, so daß letztendlich nicht nur geradlinige sondern auch krummlinige Kanäle erzeugt werden können. Das Kunststoffschaummaterial ist nach seiner Aushärtung flexibel, so daß die Einsatzteile aus dem Kunststoffschaummaterial herausgezogen werden können. Danach verbleibt also ein Kunststoffschaumkörper, der von ein oder mehreren geradlinig oder krummlinig verlaufenden Kanälen durchzogen ist, wobei die Kanäle aufgrund der porösen Struktur des Kunststoffschaummaterials untereinander verbunden sind. Bei dem Kunststoffschaummaterial handelt es sich zweckmäßigerweise entweder um offenzelliges oder geschlossenzelliges Material. Insbesondere wird als Kunststoffschaummaterial Polyurethan eingesetzt.

Nachdem das oder die Einsatzteile aus dem Kunststoffschaumkörper herausgezogen worden sind, wird der Kunststoffschaumkörper mit einem Benetzungsmaterial benetzt. Diese Benetzung muß man sich derart vorstellen, daß die gesamte Oberfläche der Struktur des Kunststoffschaumkörpers mit dem Benetzungsmaterial versehen ist. Vorzugsweise wird als Benetzungsmaterial Schlicker eingesetzt. Grundsätzlich ist es wichtig, daß das Benetzungsmaterial aushärtet, so daß nach dem Aushärten des Benetzungsmaterials ein selbständig tragfähiger benetzter Kunststoffschaumkörper entsteht, dessen Eigenformstabilität und Eigentragfähigkeit durch das Benetzungsmaterial gegeben ist. In dem so erstellten porösen Körper befinden sich also zum einen die Kanäle, deren Innenwände von dem Benetzungsmaterial benetzt sind, und zum anderen die Verbindungen zwischen benachbarten Kanälen. Anschließend wird dieser von ausgehärtetem Benetzungsmaterial benetzter Kunststoffschaumkörper so stark erhitzt, daß das Kunststoffschaummaterial durch Verbrennung entfernt wird.

Auf die oben beschriebene Weise lassen sich mit Kanälen versehene poröse Körper beliebiger Länge herstellen, und zwar auch dann, wenn die Kanäle Hinterschneidungen oder dergleichen dreidimensional sich verändernde Verläufe aufweisen. Ein derartiger Körper kann durch Aufbringen einer beispielsweise katalytisch wirkenden Schicht auch als Katalysatorelement eingesetzt werden. Mit bzw. ohne diese zusätzliche Schicht läßt er sich in jedem Fall als chemischer Mischer einsetzen, der eine ihn durchziehende Strömung aus einem Fluidgemisch vergleichmäßigt und dadurch die Fluide vermischt. Der Vorteil eines derartigen Mischers (poröser Körper mit diesen durchziehenden Kanälen) besteht auch darin, daß sein Strömungswiderstand nur gering ist. Sicherlich würde man auch bei einem porösen Körper einen Fluiddurchsatz erzielen können, allerdings unter Entstehung eines wesentlich höheren Strömungswiderstandes, als dies bei dem nach einem der vorstehenden Verfahren hergestellten porösen Körper der Fall ist.

Gemäß einer weiteren vorteilhaften Variante kann der Mischer des Abgassystems hergestellt werden, indem
- eine wellenförmige flexible Matte aus Kunststoffschaummaterial hergestellt wird,
- die Matte zu einem Kunststoffschaumkörper aufgewickelt wird,
- die Oberfläche des Kunststoffschaumkörpers mit einem aushärtbaren Benetzungsmaterial benetzt wird und
- das Kunststoffschaummaterial des mit Benetzungsmaterial benetzten Kunststoffschaumkörpers durch Erhitzen desselben entfernt wird, so daß ein von Fluid durchströmbarer, poröser, aus dem Benetzungsmaterial bestehender Körper entsteht.

Bei dieser Herstellungsvariante wird eine wellenförmige flexible Matte aus offen- bzw. geschlossenzelligem Kunststoffschaummaterial erzeugt, die anschließend zu einem (Wickel-)Körper aufgewickelt wird. Der auf diese Weise entstandene Kunststoffschaummaterialkörper ist von Kanälen durchzogen, die zwischen den Tälern und Bergen benachbarter Wicklungen der wellenförmigen flexiblen Matte entstehen. Der Wickelkörper behält beispielsweise seine Wickelstruktur durch Einsatz eines Klebemittels bei.

Die Einsatzteile können starr oder vorzugsweise flexibel und/oder aufblasbar sein. Nachdem der Kunststoffschaumkörper hergestellt ist, können die bis dahin aufgeblasenen Einsatzteile entlüftet bzw. entspannt werden, um alsdann aus dem Kunststoffschaumkörper entfernt zu werden. Sofern die Einsatzteile nicht aufblasbar, jedoch flexibel sind, lassen sie sich auch infolge ihrer Flexibilität bequem aus dem Schaumstoff herausziehen.

Nach Herstellung dieses Wickelkörpers erfolgt wiederum die Benetzung mit Benetzungsmaterial, das anschließend aushärtet. Danach wird der so erstellte Körper erhitzt, um das Kunststoffschaummaterial zu entfernen. Die mit dem nach dieser Variante hergestellten porösen Körper erzielbaren Vorteile sind identisch zu den im Zusammenhang mit der ersten erfindungsgemäßen Variante beschriebenen Vorteilen. Zusätzlich kommt bei der zweiten Herstellungsvariante noch hinzu, daß das Herstellungsverfahren einfacher ist, da keinerlei Einsatzteile in Kunststoffschaummaterial eingebettet werden und anschließend aus dem ausgehärteten und noch flexiblen Kunststoffschaummaterial herausgezogen werden müssen.

Nachfolgend wird die Erfindung anhand bevorzugter Ausführungsformen sowie mehrere Verfahren zur Herstellung eines Filters bzw. Mischers unter Bezugnahme auf die anliegenden Zeichnungen näher erläutert. Es zeigen:
- Fig. 1: eine schematische Darstellung eines Abgassystems mit Beruhigungskammer und
- Fig. 2: eine schematische Darstellung des in Fig. 1 dargestellten Abgassystems, in dem zusätzlich ein Filter vorgesehen ist.
- Fign. 3 bis 7: schematisch die einzelnen Herstellungsschritte zur Erzeugung eines von schrägverlaufenden Kanälen durchzogenen Kunststoffschaummaterialkörpers,
- Fig. 8: einen Schnitt durch einen aus mehreren gemäß den Fign. 3 bis 7 erzeugten Kunststoffschaummaterial-körpern aufgebauten Schaumkörper,
- Fig. 9: eine perspektivische Ansicht eines Kunststoffschaumkörpers, teilweise aufgebrochen,
- Fign. 10 bis 13: schematisch die einzelnen Herstellungsschritte zur Erzeugung eines von schrägverlaufenden Kanälen durchzogenen Kunststoffschaummaterialkörpers gemäß einer alternativen Ausgestaltung des Herstellungsverfahrens,
- Fign. 14 bis 18: die einzelnen Herstellungschritte zur Erzeugung des von Kanälen durchzogenen Kunststoffschaummaterialkörpers,
- Fign. 19 und 20: die für die Herstellung eines flexiblen Kunststoffschaummaterialkörpers mit diesen durchziehenden Kanälen erforderlichen Formen bzw. Einsatzteile und
- Fign. 21 und 22: die Herstellung eines flexiblen Kunststoffschaummaterialkörpers mit diesen durchziehenden Kanälen, nämlich in Wickeltechnik.

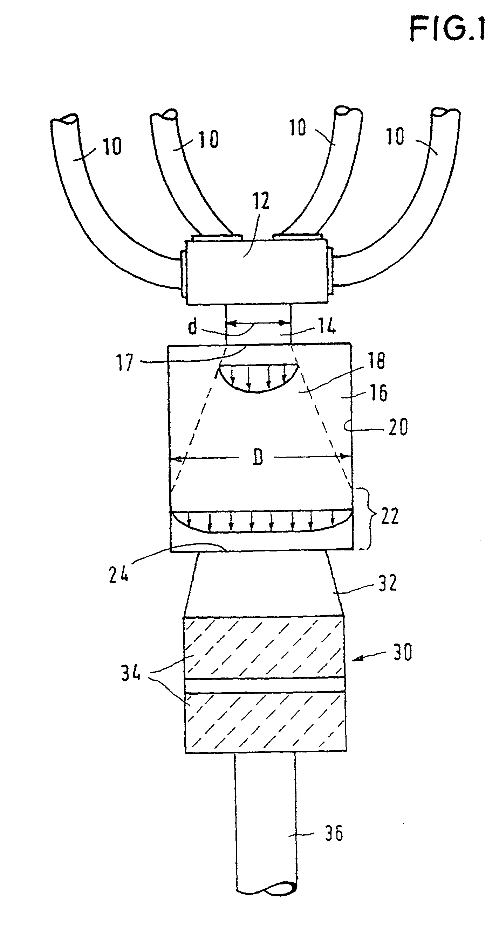

Bei einem Abgassystem sind mehrere Krümmerrohre 10 in einem Sammler 12 zusammengeführt. Bei dem in Fig. 1 dargestellten Abgassystem handelt es sich um ein Abgassystem für eine Vierzylinder-Verbrennungskraftmaschine. Bei Verbrennungskraftmaschinen mit einer größeren Anzahl von Zylindern können auch Zwischensammler vorgesehen sein, in die jeweils eine bestimmte Anzahl von Krümmungsrohren geführt ist. Die aus den Zwischensammlern führenden Rohre werden sodann in einem Sammler zusammengeführt. Ebenso können bei Verbrennungskraftmaschinen mit einer großen Anzahl Zylindern zwei oder mehrere Abgassysteme parallel zueinander angeordnet sein.

Die Form des Sammlers 12 ist in den Figuren vereinfacht dargestellt. Der Sammler 12 kann unterschiedlich ausgebildet sein und weist zur Optimierung des Strömungsverhaltens des Abgassystems eine komplizierte geometrische Formgebung auf.

Der Sammler 12 ist mit einem Zuführrohr 14 verbunden, in das sämtliche Abgase aus den Krümmerrohren 10 gelangen. An das Zuführrohr 14 schließt sich in Strömungsrichtung der Abgase eine Beruhigungskammer 16 mit zylindrischem Querschnitt an. Der Querschnitt der Beruhigungskammer kann beispielsweise auch kegelstumpfförmig ausgebildet sein oder eine andere, insbesondere an die Umgebung angepaßte Geometrie aufweisen. Bie Beruhigungskammer 16 muß in jedem Fall so ausgebildet sein, daß sich in ihr ein Freistrahl bildet, wobei Störungen des Freistrahls aufgrund der Form der Beruhigungskammer 16 in Kauf genommen werden können, so lange in der Beruhigungskammer 16 eine ausreichende Homogenisierung der Abgasströmung stattfindet. Die Abgase strömen durch eine Einlaßöffnung 17 in die Beruhigungskammer 16. Der Durchmesser D der Beruhigungskammer ist um das mehr als 2,5fache größer als der Durchmesser d des Zuführrohrs 14. Dadurch wird die für die Abgasströmung zur Verfügung stehende Querschnittsfläche beim Eintritt des Abgasstroms in die Beruhigungskammer 16 sprungartig vergrößert. Durch die sprungartige Vergrößerung der Querschnittsfläche tritt die Abgasströmung als Freistrahl 18 in die Beruhigungskammer 16 ein und breitet sich in ihr als Freistrahl aus. Direkt nach dem Eintritt der Abgasströmung in die Beruhigungskammer 16 ist der Strömungsverlauf parabelförmig. Da innerhalb der Beruhigungskammer zwischen dem Freistrahl 18 und einer Innenwand 20 der Beruhigungskammer 16 keine Reibung stattfindet, gleicht sich der Strömungsverlauf in radialer Richtung aus, so daß die Geschwindigkeit abnimmt und die Homogenität der Abgasströmung innerhalb der Beruhigungskammer in Strömungsrichtung zunimmt. Erst wenn der Freistrahl 18 die Innenwand 20 der Beruhigungskammer 16 wieder berührt, treten erneut Reibungseffekte zwischen dem Abgasstrom und der Innenwand 20 der Beruhigungskammer im Bereich 22 auf. Da der Abgasstrom vor dem Berühren der Innenwand 20 der Beruhigungskammer 16 bereits stark homogenisiert ist, sind die im Bereich 22 auftretenden Reibungseffekte gering, so daß dadurch keine störenden Inhomogenitäten in dem Abgasstrom hervorgerufen werden.

Die Länge des Zuführrohrs 14 beträgt nur wenige Zentimeter. Bei einer entsprechenden Ausbildung des Sammlers 12 kann das Zuführrohr 14 auch entfallen.

Der Abgasstrom tritt aus einer Austrittsöffnung 24 aus der Beruhigungskammer 16 aus und in einen Katalysator 30 ein, der sich an die Beruhigungskammer 16 anschließt. In einem Katalysatorgehäuse 32 sind zwei Katalysatorelemente 34 vorgesehen, die sich jeweils über den gesamten Querschnitt des im wesentlichen zylindrischen Katalysatorgehäuses 32 erstrecken. Ebenso können der Katalysator 30 und die Beruhigungskammer 16 zu einer Einheit zusammengefaßt werden, so daß die Beruhigungskammer 16 innerhalb des Katalysators 30 unmittelbar vor den Katalysatorelementen angeordnet ist. Von den Katalysatorelementen 34 werden die Abgase in bekannter Weise gereinigt. Mit dem Katalysator 30 ist ein Auslaßrohr 36 verbunden, durch das die gereinigten Abgase abgeführt oder beispielsweise Auspufftöpfen zugeleitet werden.

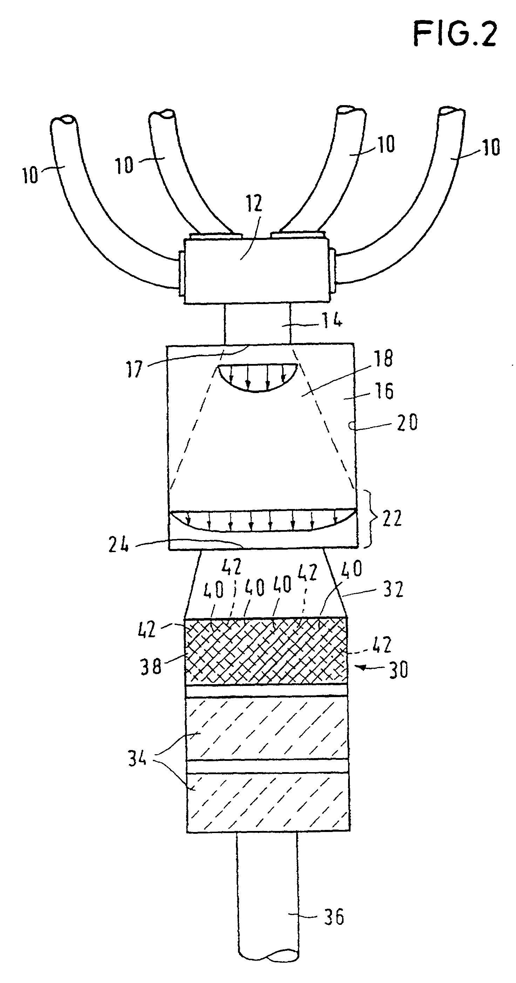

Das in Fig. 2 dargestellte Abgassystem weist zusätzlich zu dem anhand Fig. 1 beschriebenen Abgassystem einen Filter 38 auf. Der Filter 38 ist in dem Katalysatorgehäuse 32 angeordnet. Er befindet sich in Strömungsrichtung vor den Katalysatorelementen 34 und dient zum Filtern der ggf. in den Abgasen vorhandenen unverbrannten Verbrennungsgasgemische. Bei dem Filter 38 handelt es sich um einen porösen Filter aus keramischem Material, der sich über den gesamten Querschnitt des Katalysatorgehäuses 32 erstreckt.

Der Filter 38 weist zusätzlich bezüglich der Strömungsrichtung des Abgases schräg verlaufende Kanäle 40,42 auf. Aufgrund der Anordnung der Kanäle 40,42 und aufgrund der Porosität des Filters 38 werden die unterschiedlichen Bestandteile der Abgase durch den Filter 38 gemischt.

Anhand der nachfolgenden Figuren werden unterschiedliche Herstellungsverfahren für den zusätzlich als Mischer wirkenden Filter 38 aus porösem temperaturbeständigem Material beschrieben:

Für ein bevorzugtes Herstellungsverfahren wird jeweils Schaum verwendet, der in seinen üblichen Produktionsgrößen (beispielsweise 60 m x 1,5 m x 0,8 m) als Block hergestellt wird. Bei diesem Schaum handelt es sich insbesondere um geschlossenzelliges Material, das in einem zweiten an sich gängigen Verfahren mittels kontrollierter Druckwelle bzw. Explosion bearbeitet wird, so daß die geschlossenen Zellen des Schaums geöffnet werden. Auf diese Weise entsteht ein Block aus offenporigem Schaum.

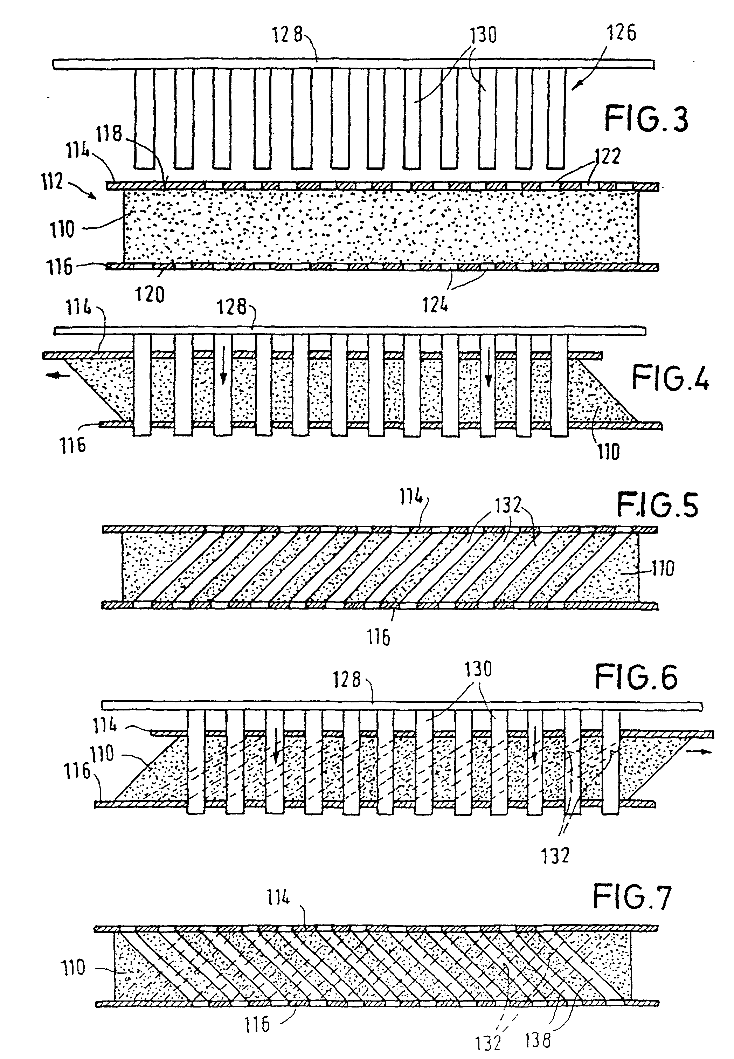

Dieser Schaumblock wird in beispielsweise 25 mm dicke Schaummatten 110 (oben auch mit Schaumkörper oder Kunststoffschaummaterialkörper bezeichnet) geschnitten (Tafelmaterial). Jede dieser Matten 110 wird bei dem Verfahren gemäß Fign. 3 bis 7 in ein Werkzeug 112 eingelegt, das zwei zueinander parallele und aufeinander zu sowie voneinander weg verfahrbare Andrück- bzw. Anlage-Lochplatten 114,116 aufweist. Die obere Lochplatte 114 liegt an der Oberseite 118 der Schaummatte 110 an, während die untere Lochplatte 116 an der Unterseite 120 der Schaummatte 110 anliegt. Diese Situation ist in Fig. 3 gezeigt.

Durch Bewegen mindestens einer der beiden Lochplatten 114,116 in der Ebene ihrer Erstreckung wird die Schaummatte 110 gemäß Fig. 4 geschert. Hierzu ist es erforderlich, daß die Platten 114,116 mit einer gewissen Haftreibung an der Schaummatte 110 anliegen. Beispielsweise ist es möglich, daß die Platten 114,116 Dorne oder dergleichen Vorsprünge aufweisen, die in die Ober- bzw. Unterseite 118,120 eintauchen und sich dort verhaken.

Nach dem Relativ-Verfahren der beiden Platten 114,116 fluchten die in der oberen Platte 114 eingebrachten Löcher 122 mit den Löchern 124, die in der unteren Platte 116 angeordnet sind. Anschließend werden die Platten 114,116 aufeinanderzubewegt, so daß die dazwischen angeordnete Schaummatte 110 im gescherten Zustand durch elastische Verformung kompensiert wird (in den Fign. 3 bis 13 nicht enthalten). Jetzt kann ein Stanzwerkzeug 126 durch die miteinander fluchtenden Löcher 122,124 und der zwischen diesen angeordnete Schaummatte 110 hindurchgetrieben werden. Das Stanzwerkzeug 126 weist eine Halteplatte 128 mit insbesondere rohrförmigen Schneid- bzw. Stanzelemente 130 auf, die von der Halteplatte 128 entsprechend dem Muster und der Anordnung der Löcher 122 bzw. 124 abstehen. Mit diesen Schneid- bzw. Stanzelementen 130 lassen sich gemäß Fig. 4 erste Kanäle 132 in die gescherte Schaummatte 110 einbringen.

Nach diesem Vorgang werden die beiden Andrückplatten 114,116 wieder in ihre Ausgangsposition zurückbewegt, so daß die Schaummatte 110 wieder ihre ursprüngliche Form (entspannter Zustand) annimmt. Wie in Fig. 5 zu erkennen ist, laufen die in Richtung der Normalen zu der Ober- und Unterseite 118,120 der gescherten Schaummatte 110 in diese eingebrachten Kanäle 132 nun schräg, wobei der Winkel abhängig von der zuvor auf die Matte 110 aufgebrachten Scherung ist.

Der oben beschriebene Vorgang geschieht also in der Weise, daß die Schaummatte 110 zunächst von den Andrückplatten 114,116 mehr oder weniger stark zusammengedrückt und dann in Trapezform geschert wird. Danach wird der Stanzvorgang in Normalrichtung zur Ober- und Unterseite der Schaummatte 110 ausgeführt. Nach Zurückfahren des Stanzwerkzeuges 126 und nach Entspannen der Schaummatte 110 befinden sich in dieser die Kanäle 132, deren Ausrichtung im Winkel zur normalen der Ober- und Unterseiten der Schaummatte 110 verlaufen.

Nach dem obigen Verfahren wird eine erste Gruppe von in mehreren ersten Reihen 134 angeordneten ersten Kanälen 132 in die Schaummatte 110 eingebracht. Mehrere zweite Kanalreihen 136 mit zu den vorherigen Kanalreihen 134 jeweils entgegengesetzt ausgerichteten zweiten Kanälen 138 werden dadurch erzeugt, daß die Schaummatte 110 zwischen den Andrückplatten 114,116 in zum vorherigen Verfahrensschritt entgegengesetzter Richtung geschert und die Kanäle 132 nach Komprimierung der Schaummatte 110 dann anschließend mittels des Stanzwerkzeuges 126, das quer zur Bewegung der Andrückplatte 114 bzw. 116 verfahren wird, eingebracht werden (Fig. 6). So läßt sich die Schaummatte 110 mit einer Vielzahl von benachbarten Reihen 134,136 von Kanälen 132,138 durchsetzen, wobei die ersten Kanäle 132 ein und derselben Reihe jeweils parallel zueinander verlaufen und die zweiten Kanäle 138 benachbarter Reihen 136 entgegengesetzt zueinander ausgerichtet sind.

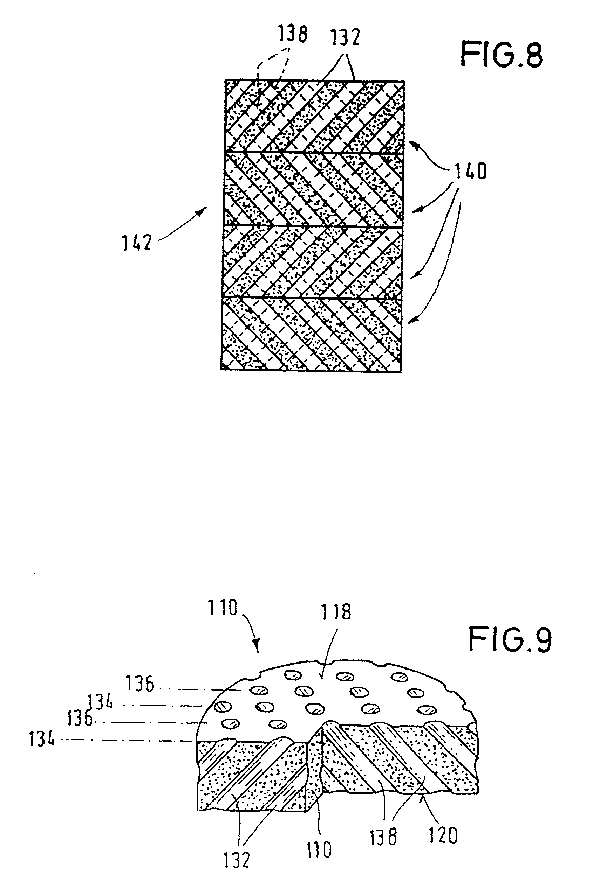

Aus den gemäß oben beschriebenen Verfahren hergestellten Schaummatten 110 werden Stücke ausgeschnitten, deren Form den Querschnitt des herzustellenden von Fluid zu durchströmenden Körpers entsprechen. Beispielsweise lassen sich aus den Schaummatten 110 Zylinderstücke 140 ausschneiden (Fig. 9). Mehrere derartige Zylinderstücke 140 werden gemäß Fig. 8 in axialer Richtung aneinander gesetzt, so daß die so entstehende Zylinderstückanordnung 142 von Kanälen durchzogen ist, die abschnittsweise zickzackförmig und damit gegenläufig verlaufen.

In einem weiteren Schritt wird die gesamte Struktur 142 mit Schlicker benetzt, der anschließend aushärtet. Über den ausgehärteten Schlicker sind die einzelnen Zylinderstücke 140 miteinander verbunden und bilden eine einzige Einheit, nämlich den porösen Körper. Der Schlicker wird ausgebrannt, so daß ein Körper entsteht, der aus keramischem Schaum besteht. Dieser Körper weist keinerlei Kunststoffmaterial mehr auf, da dieses beim Brennen verdampft.

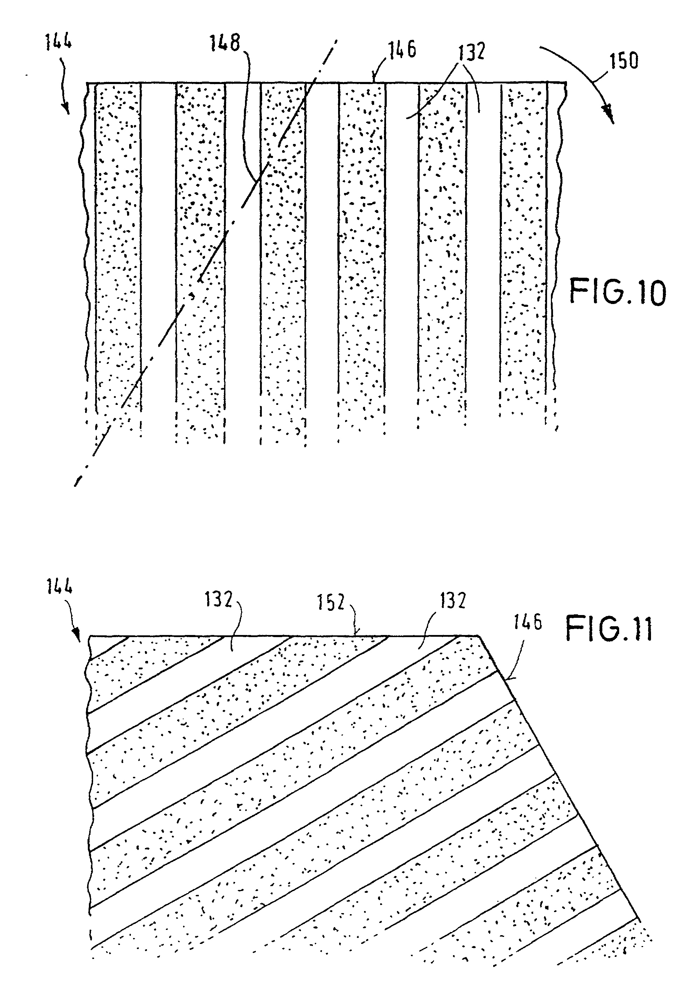

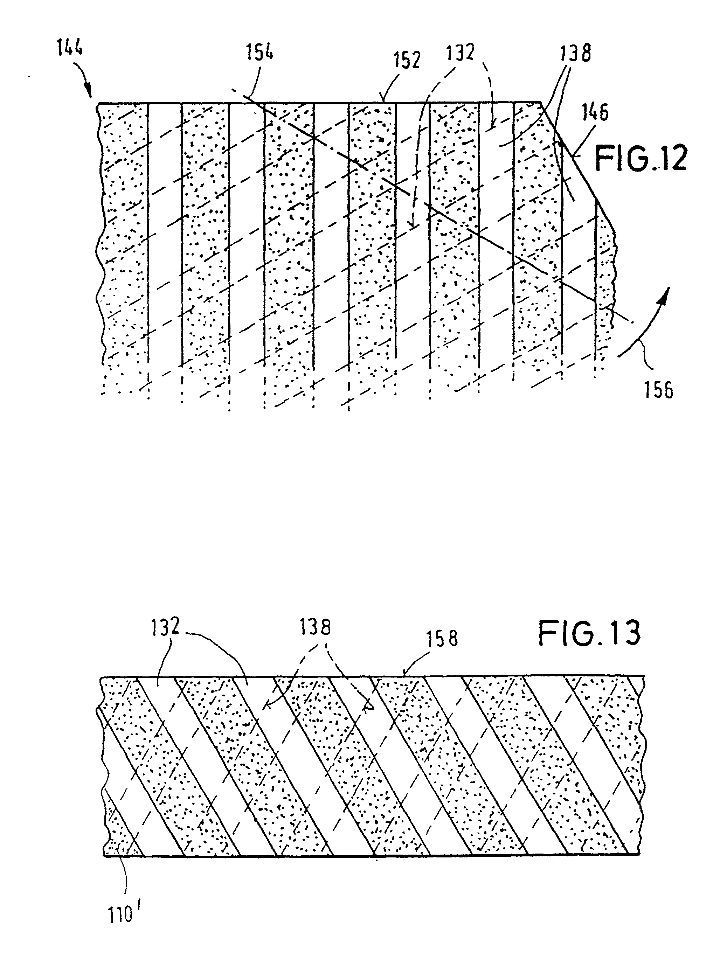

Ein alternatives Herstellungsverfahren zur Erzeugung eines Schaumkörpers 110' mit diesen durchsetzenden ersten und zweiten Kanälen 132,138 wird nachfolgend anhand der Schema-Darstellungen gemäß den Fign. 10 bis 13 erläutert. Ausgehend von einem Blockschaummaterial 144 werden in eine von dessen Außenflächen 146 erste Kanäle 132 eingebracht. Diese Kanäle 132 verlaufen im wesentlichen rechtwinklig zur Erstreckung der Außenfläche 146, in die sie eingebracht sind. Anschließend wird der Blockschaum 144 entlang der Linie 148 geschnitten. Nach Drehung des so geschnittenen Blockschaums 144 in Richtung des Pfeils 150 der Fig. 10 ergibt sich die Situation gemäß Fig. 11, in der die durch die Schnittlinie 148 definierte Schnittfläche 152 oben angeordnet ist und in einem spitzen Winkel zur Erstreckung der ersten Kanäle 132 verläuft.

In diese Schnittfläche 152 werden nun gemäß Fig. 12 zweite Kanäle 138 eingebracht, die wiederum im wesentlichen rechtwinklig zur Schnittfläche 152 verlaufen. Danach wird der derart von ersten und zweiten Kanälen 132,138 durchzogene Blockschaum 144 entlang der Linie 154 geschnitten. Nach Drehung des so geschnittenen Blockschaums 144 in Richtung des Pfeils 156 ergibt sich die Situation gemäß Fig. 13, in der die sich entlang der Schnittlinie 154 ergebende Schnittfläche 158 oben angeordnet ist. Durch entsprechendes Zuschneiden entsteht die Schaumstoffmatte 110', die von sich kreuzenden ersten und zweiten Kanälen 132,138 durchzogen ist.

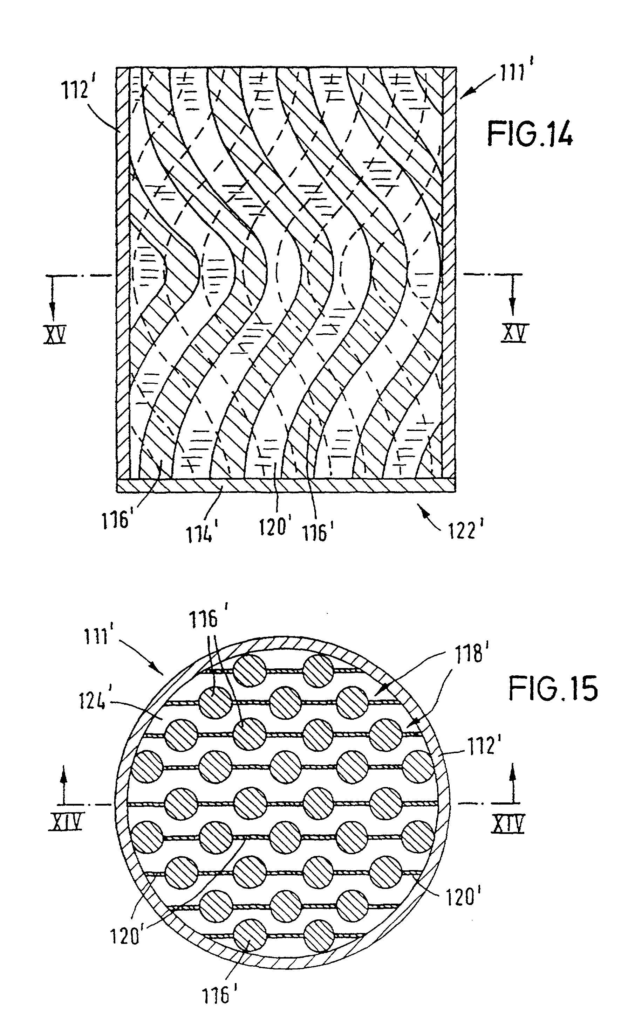

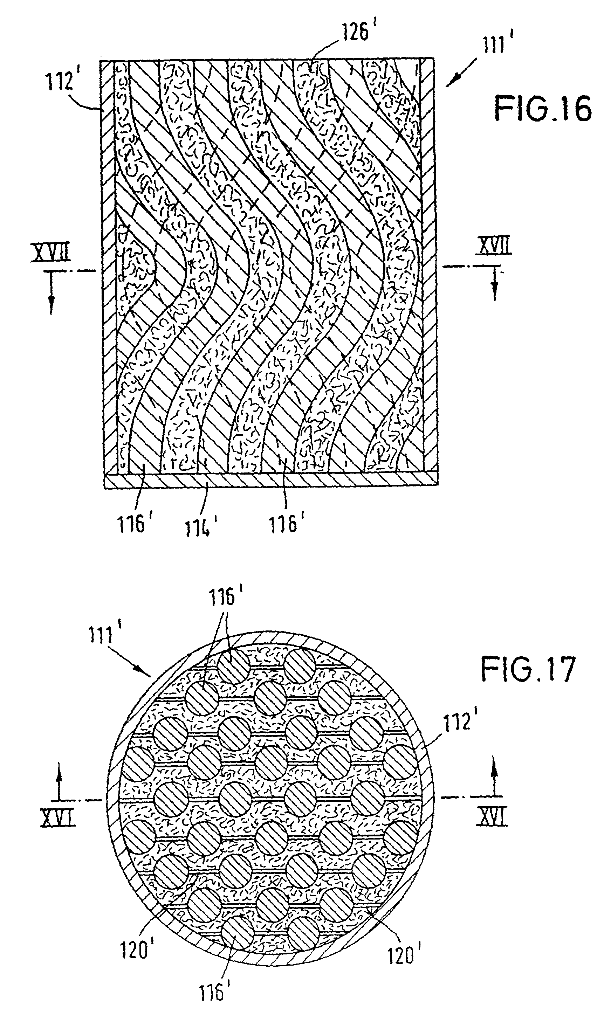

Fig. 14 zeigt einen Längsschnitt durch eine zylindrische Form 111', die aus einer Hülse 112' und einem eines der beiden stirnseitigen Enden verschließenden Bodenteil 114' besteht. Vom Bodenteil 114' ragen eine Vielzahl von schlangenlinienförmigen, im wesentlichen zylindrischen Verdickungen 116' auf, die, wie insbesondere anhand von Fig. 15 deutlich wird, in mehreren parallelen Reihen 118' nebeneinanderliegend angeordnet sind. Die schlangenlinienförmigen Verdickungen 116' einer jeder Reihe 118' sind durch dünne Verbindungsstege 120' miteinander verbunden. Diese dünnen Verbindungsstege 120' erstrecken sich wie die Verdickungen 116' über die gesamte axiale Länge der Form 111'. Diese dünnen Verbindungsstege 120' erstrecken sich auch von den der Hülse 112' jeweils benachbarten Verdickungen 116' bis zur Innenwand der Hülse 112'. Die Bodenplatte 114' mit den aufragenden Verdickungen 116' und den Verbindungsstegen 120' bildet ein Einsatzteil 122' zum Einsetzen in die Hülse 112' der Form 111'.

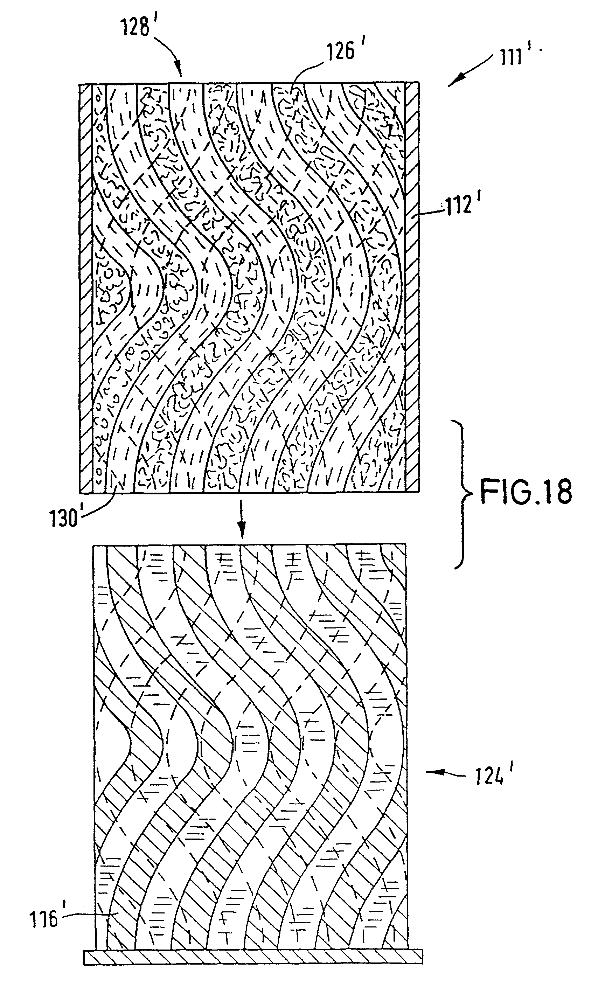

Wie insbesondere anhand von Fig. 15 zu erkennen ist, bilden sich zwischen benachbarten Reihen 118' von Verdickungen 116' und Verbindungsstegen 120' Hohlräume 124'. Diese Hohlräume 124' sind in dem in Fig. 16 bildlich dargestellten Schritt mit einem PU-Kunststoffschaummaterial 126' ausgefüllt. Dieses Kunststoffschaummaterial 126' bleibt auch nach seiner Aushärtung flexibel, so daß das gesamte Einsatzteil 122' aus der Form 111' herausgezogen werden kann, was in Fig. 18 dargestellt ist. Es entsteht auf diese Weise also ein PU-Formkörper 128', der diesen durchziehende Kanäle 130' aufweist, deren Verlauf durch den Verlauf der Verdickungen 116' bestimmt ist.

Alternativ kann vorgesehen sein, daß das Kunststoffschaummaterial 126' zusammen mit den in diesem noch eingebetteten Einsatzteilen 122' aus der Hülse 112' herausgenommen wird, um erst danach die Einsatzteile 122' aus dem Kunststoffschaummaterial 126' zu entnehmen. Grundsätzlich kann es zusätzlich von Vorteil sein, die Hülse 112' zweiteilig auszubilden, um den Entnahmevorgang des Kunststoffschaummaterials 126' ggf. zusammen mit den Einsatzteilen 122' zu erleichtern.

Anschließend wird dieser PU-Formkörper 128' aus der Hülse 112' der Form 111' entnommen und mit Keramikschlicker getränkt. Nach Aushärtung des Keramikschlickers wird der Keramikkörper erhitzt, so daß das Kunststoffschaummaterial durch Verdampfung entfernt wird. Das endgültige Produkt stellt dann einen keramischen Mischer dar, der von einzelnen Kanälen 130 durchzogen ist, die untereinander aufgrund der porösen Struktur des keramischen Mischers fluidmäßig verbunden sind.

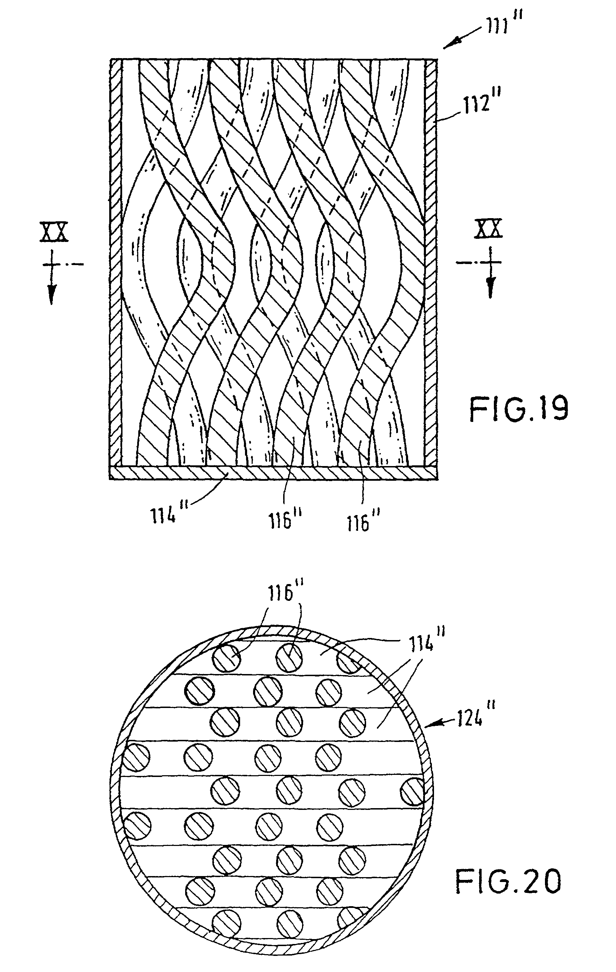

In den Fign. 19 und 20 ist eine zur Form 111' alternative Form 111" gezeigt, die eine zylindrische Wandung 112' aufweist. Von einem der beiden stirnseitigen Enden aus sind in die Form 111" mehrere Einsatzteile 124" eingesetzt, die ein geradliniges schmales leistenförmiges Bodenteil 114" mit mehreren von diesem aufragenden schlangenlinienförmigen und im Querschnitt im wesentlichen zylindrischen Verdickungen 116" aufweisen. Die einzelnen schlangenlinienförmigen Verdickungen 116" können untereinander durch durchgehende Stege verbunden sein, wobei dies allerdings nicht zwingend erforderlich ist. Wie in der Darstellung gemäß Fig. 20 zu erkennen ist, liegen die einzelnen leistenförmigen Einsatzteile 114" dicht aneinander und füllen auf diese Weise den gesamten Querschnitt der Hülse 112" der Form 111" aus.

Die Verfahrensweise zur Herstellung eines keramischen Schaumkörpers unter Verwendung der Form 111" der Fign. 19 und 20 erfolgt analog dem im Zusammenhang mit den Fign. 14 bis 18 beschriebenen Herstellungsverfahren. Nach der Aushärtung des Kunststoffschaummaterials, das weiterhin flexibel ist, werden die einzelnen Einsatzteile 124" herausgezogen. Der auf diese Weise entstehende Kunststoffschaumkörper wird dann mit keramischem Schlicker benetzt, und zwar durch Tränken, um nach Aushärtung zum Entfernen des Kunststoffschaummaterials erhitzt zu werden.

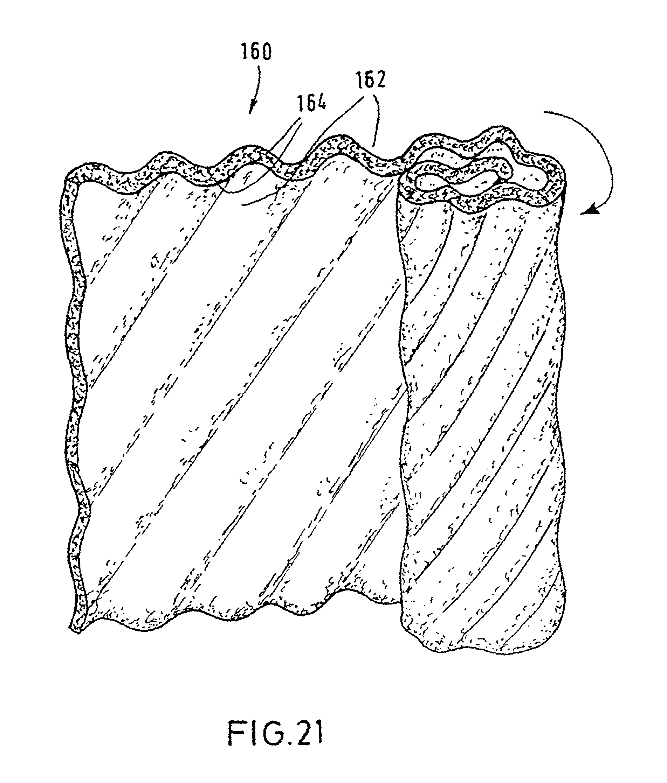

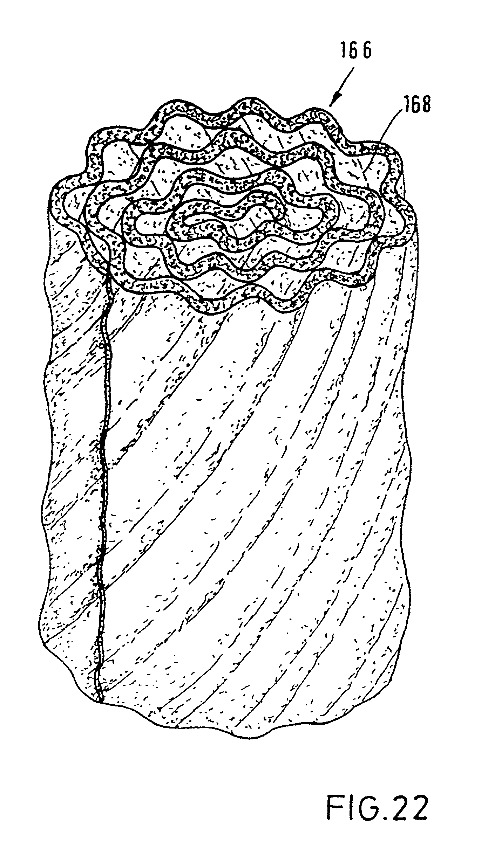

In den Fign. 21 und 22 ist eine weitere Alternative für ein Herstellungsverfahren eines keramischen Schaumkörpers dargestellt.

Diese Herstellungsvariante sieht zunächst die Herstellung einer gewellten Matte 160 aus flexiblem Kunststoffschaummaterial vor. Diese Matte 160 weist winklig verlaufende geradlinige Vertiefungen 162 bzw. Erhebungen 164 auf. Durch Aufwickeln der Matte 160 zu einem Wickelkörper 166 (siehe Fig. 22) entsteht ein Gebilde aus Kunststoffschaummaterial, das in axialer Erstreckung von mehreren Kanälen 168 durchzogen ist. Der Wickelkörper 166 wird insbesondere durch Klebematerial in seiner Form zusammengehalten und mit keramischem Schlicker benetzt. Der nach Aushärtung so entstandene keramische Schaum wird erhitzt, um das Kunststoffmaterial durch Verdampfen zu entfernen.

## Patentansprüche

1. Abgassystem für Verbrennungskraftmaschinen mit
- einem Sammler (12),
- einem in Durchströmungsrichtung hinter dem Sammler (12) angeordneten Katalysatorelement (34) und
- einer zwischen dem Sammler (12) und dem Katalysatorelement (34) angeordneten eine Einlaßöffnung (17) aufweisenden Beruhigungskammer (16), wobei eine Abgasströmung als Freistrahl (18) in die Beruhigungskammer (16) eintritt und sich in ihr als Freistrahl (18) ausbreitet,
**dadurch gekennzeichnet,**
- **daß** die Länge der Beruhigungskammer in Durchströmungsrichtung mindestens um ein Fünffaches größer als der Durchmesser (d) ihrer Einlaßöffnung (17) ist.

2. Abgassystem nach Anspruch 1, **dadurch gekennzeichnet, daß** sich an einer Eintrittsöffnung (17) der Beruhigungskammer (16) die für die Abgasströmung zur Verfügung stehende Querschnittsfläche stufenartig vergrößert.

3. Abgassystem nach Anspruch 1 oder 2, **dadurch gekennzeichnet, daß** sich der Querschnitt der Beruhigungskammer (16) in Durchströmungsrichtung, insbesondere zur Anpassung an die Umgebung, ändert.

4. Abgassystem nach Anspruch 2 oder 3, **dadurch gekennzeichnet, daß** das Verhältnis zwischen dem Durchmesser (d) der Eintrittsöffnung (17) und dem Durchmesser (D) der Beruhigungskammer (16) kleiner als 1 : 2,5 ist.

5. Abgassystem nach einem der Ansprüche 1 bis 4, **dadurch gekennzeichnet, daß** die Beruhigungskammer (16) unmittelbar hinter dem Sammler (12) angeordnet ist.

6. Abgassystem nach einem der Ansprüche 1 bis 5, **dadurch gekennzeichnet, daß** die Beruhigungskammer (16) unmittelbar vor dem Katatysatorelement (34) angeordnet ist.

7. Abgassystem nach einem der Anspruche 1 bis 5, **dadurch gekennzeichnet, daß** das Katalysatorelement (34) innerhalb der Beruhigungskammer (16) angeordnet ist.

8. Abgassystem nach einem der Ansprüche 1 bis 7, **dadurch gekennzeichnet, daß** zwischen dem Sammler (12) und dem Katalysatorelement (34) zusätzlich ein Filter bzw. Mischer (38) zum Filtern von unverbrannten Verbrennungsgasgemischen und zum Durchmischen der Verbrennungs-gase angeordnet ist.

9. Abgassystem nach Anspruch 8, **dadurch gekennzeichnet, daß** der Filter bzw. Mischer (38) vor oder innerhalb der Beruhigungskammer (16) angeordnet ist.

10. Abgassystem nach Anspruch 8 oder 9, **dadurch gekennzeichnet, daß** der Filter bzw. Mischer (38) ein poröser keramischer Körper, insbesondere ein Schaumkörper ist.

11. Abgassystem nach einem der Ansprüche 8 bis 10, **dadurch gekennzeichnet, daß** der Filter bzw. Mischer (38) eine Anzahl von ersten Kanälen (40,132) aufweist, die in einem Winkel zur Durchströmrichtung angeordnet sind.

12. Abgassystem nach Anspruch 11, **dadurch gekennzeichnet, daß** der Filter bzw. Mischer (38) eine Anzahl von zweiten Kanälen (42,138) aufweist, die sowohl in einem Winkel zu den ersten Kanälen (40,132) als auch in einem Winkel zur Durchströmrichtung angeordnet sind.

13. Abgassystem nach Anspruch 12, **dadurch gekennzeichnet, daß** die ersten bzw. zweiten Kanäle (40,132;42,138) jeweils in mindestens einer Reihe (134,136) angeordnet sind, wobei die Kanalreihen alternierend nebeneinander und parallel zueinander angeordnet sind.

## Claims

1. A gas exhaust system for internal combustion engines, comprising
- an exhaust manifold (12),
- a catalyst element (34) arranged downstream of the exhaust manifold (12), seen in the flow direction, and
- a smoothing chamber (16) arranged between the exhaust manifold (12) and the catalyst element (34) and having an inlet opening (17), a flue gas flow entering the smoothing chamber (16) as a free jet (18) and expands therein also as a free jet (18),
**characterized in that**
- the length of the smoothing chamber, seen in the flow direction, is at least five times larger than the diameter (d) of its inlet opening (17)

2. The gas exhaust system of claim 1, wherein, at an inlet opening (17) of the smoothing chamber (16), the cross-sectional area available for the flue gas flow increases step-like.

3. The gas exhaust system of claim 1 or 2, wherein the cross section of the smoothing chamber (16) varies in the flow direction, in particular in adaptation to the surroundings.

4. The gas exhaust system of claim 2 or 3, wherein the ratio between the diameter (d) of the inlet opening (17) and the diameter (D) of the smoothing chamber (16) is greater than 1 : 2.5.

5. The gas exhaust system of any one of claims 1 to 4, wherein the smoothing chamber (16) is arranged immediately behind the exhaust manifold (12).

6. The gas exhaust system of any one of claims 1 to 5, wherein the smoothing chamber (16) is placed immediately in front of the catalyst element (34).

7. The gas exhaust system of any one of claims 1 to 5, wherein the catalyst element (34) is arranged within the smoothing chamber (16).

8. The gas exhaust system of any one of claims 1 to 7, wherein, between the exhaust manifold (12) and the catalyst element (34), a filter or mixer (38) is additionally provided for filtering out not combusted combustion gas mixtures and for mixing the combustion gases.

9. The gas exhaust system of claim 8, wherein the filter or mixer (38) is arranged in front of, behind or within the smoothing chamber (16).

10. The gas exhaust system of claim 8 or 9, wherein the filter or mixer (38) is a porous ceramic member, in particular a foamed material member.

11. The gas exhaust system of any one of claims 8 to 10, wherein the filter or mixer (38) comprises a number of first channels (40, 132) arranged under an angle to the flow direction.

12. The gas exhaust system of claim 11, wherein the filter or mixer (38) comprises a number of second channels (42, 138) arranged both under an angle to the first channels (40, 132) and under an angle to the flow direction.

13. The gas exhaust system of claim 12, wherein the first or second channels (40, 132; 42, 138) are arranged in at last one row (134, 136), the rows of channels being arranged alternating in a side by side and parallel relationship.

## Revendications

1. Système d'échappement pour moteurs à combustion interne, comportant :
• un collecteur (12),
• un élément catalyseur (34) disposé en aval du collecteur (12), dans le sens d'écoulement, et
• une chambre de mise au repos (16) qui est disposée entre le collecteur (12) et l'élément catalyseur (34) et comporte une ouverture d'entrée (17), un écoulement de gaz d'échappement pénétrant sous la forme d'un jet libre (18) dans la chambre de mise au repos (16) et s'y élargissant, sous la forme d'un jet libre (18),
**caractérisé en ce que** la longueur de la chambre de mise au repos dans le sens de circulation est supérieure, au moins du quintuple, au diamètre (d) de son ouverture d'entrée (17).

2. Système d'échappement selon la revendication 1, **caractérisé en ce que** la surface en coupe transversale, qui est disponible pour l'écoulement des gaz d'échappement, augmente d'une manière étagée au niveau d'une ouverture d'entrée (17) de la chambre de mise au repos (16).

3. Système d'échappement selon la revendication 1 ou 2, **caractérisé en ce que** la section transversale de la chambre de mise au repos (16) varie dans le sens d'écoulement, notamment pour l'adaptation à l'environnement.

4. Système d'échappement selon la revendication 2 ou 3, **caractérisé en ce que** le rapport entre le diamètre (d) de l'ouverture d'entrée (17) et le diamètre (D) de la chambre de mise au repos (16) est inférieur à 1:2,5.

5. Système d'échappement selon l'une des revendications 1 à 4, **caractérisé en ce que** la chambre de mise au repos (16) est disposée directement en aval du collecteur (12).

6. Système d'échappement selon l'une des revendications 1 à 5, **caractérisé en ce que** la chambre de mise au repos (16) est disposée directement en amont de l'élément catalyseur (34).

7. Système d'échappement selon l'une des revendications 1 à 5, **caractérisé en ce que** l'élément catalyseur (34) est disposé à l'intérieur de la chambre de mise au repos (16).

8. Système d'échappement selon l'une des revendications 1 à 7, **caractérisé en ce qu'**entre le collecteur (12) et l'élément catalyseur (34) est disposé en supplément un filtre mélangeur (38) servant à filtrer des mélanges de gaz de combustion non brûlés et à mélanger de façon intime les gaz de combustion.

9. Système d'échappement selon la revendication 8, **caractérisé en ce que** le filtre ou le mélangeur (38) est disposé en amont ou à l'intérieur de la chambre de mise au repos (16).

10. Système d'échappement selon la revendication 8 ou 9, **caractérisé en ce que** le filtre ou le mélangeur (38) est un corps céramique poreux, notamment un corps en matériau mousse.

11. Système d'échappement selon l'une des revendications 8 à 10, **caractérisé en ce que** le filtre ou le mélangeur (38) comporte un certain nombre de premiers canaux (40, 132), qui sont disposés en faisant un angle par rapport au sens d'écoulement.

12. Système d'échappement selon la revendication 11, **caractérisé en ce que** le filtre ou le mélangeur (38) comporte un certain nombre de seconds canaux (42, 138), qui sont disposés aussi bien en faisant un certain angle par rapport aux premiers canaux (40, 132) qu'en faisant un angle par rapport au sens d'écoulement.

13. Système d'échappement selon la revendication 12, **caractérisé en ce que** les premiers et seconds canaux (40, 132 ; 42, 138) sont disposés respectivement suivant une rangée (134, 136), les rangées de canaux étant disposées côte à côte d'une manière alternée et en étant parallèles entre elles.
